**Europäisches Patentamt**

(19) **European Patent Office**

**Office européen des brevets**

(11) Veröffentlichungsnummer: **0 111 014**
**A1**

(12) # EUROPÄISCHE PATENTANMELDUNG

(21) Anmeldenummer: 82111274.5

(22) Anmeldetag: 06.12.82

(51) Int. Cl.³: **B 28 C 9/00**
**B 03 B 9/06, B 28 C 5/46**

(43) Veröffentlichungstag der Anmeldung:
20.06.84 Patentblatt 84/25

(84) Benannte Vertragsstaaten:
AT BE CH DE FR IT LI NL

(71) Anmelder: Weiskircher, Franz
Welschbachstrasse 14
D-6688 Illingen 5(DE)

(72) Erfinder: Weiskircher, Franz
Welschbachstrasse 14
D-6688 Illingen 5(DE)

(74) Vertreter: Morbe, Kurt
Am Gehlenberg 2
D-6602 Dudweiler(DE)

(54) **Verfahren und Vorrichtung zur Trennung und Wiederverwertung aller Restbeton-Bestandteile.**

(57) Eine an sich bekannte Rückgewinnungsanlage für Kies und Grobsand aus Restbeton, bestehend aus einem Einfülltrichter (3) einem sich daran anschließenden Waschtrog (4), einer sich darin drehenden Förderschnecke (5), auf der Oberseite des Waschtrogs angeordnete Düsen (7) und Sprührohre (8,9) als Zuführ für das zum Trennen des Kies und des Grobsandes von dem staubfeinen Zement und dem Feinstsand erforderliche Waschwasser und einer Abwurföffnung (10) am oberen Ende des Waschtrogs mit einem darunter angeordneten Separierungssieb (11) werden erfindungsgemäß ergänzt durch ein Becken (14), das mit dem Einfülltrichter verbunden ist, in dem Becken angeordnete Rührwerke (15) sowie Pumpen (16,17) zur Versorgung des Waschtrogs (4), des Galgens (18) zum Ausspülen der Fahrmischer-Trommeln (1) und zum Hochtransportieren der aus dem Zement und dem Feinstsand bestehenden Trübe zur Wiederverwertung in den Betonmischer (12), wobei diesem ein Vorratsbehälter (19) mit einem Konsistenz-Meßgerät (21) vorgeschaltet ist. Das funktionelle Zusammenwirken dieser Teile wird manuell, elektrisch und/oder pneumatisch gesteuert.

./...

EP 0 111 014 A1

## Verfahren und Vorrichtung zur Trennung und Wiederverwertung aller Restbeton-Bestandteile.

Die Erfindung betrifft ein Verfahren und eine Vorrichtung zur Trennung und Wiederverwertung aller Restbeton-Bestandteile gemäß dem Oberbegriff der Patentansprüche 1,2.

Insbesondere bei großen Beton-Aufbereitungsanlagen fallen laufend größere Mengen Frischbeton als zunächst unbrauchbare Restmengen an. Diese ergeben sich teilweise durch eine ungenügende Entleerung der Transportfahrzeuge an den Baustellen sowie auch als gegenüber dem tatsächlichen Verbrauch anfallende Übermengen, die wieder zur Aufbereitungsanlage zurücktransportiert werden müßen.

Früher hat man diese Restbetonmengen auf Halden gekippt, wo sie nach kurzer Zeit erhärteten und große, die Landschaft verschandelnde Kunststeinklötze bildeten.
Es ist bereits ein Gerät zur Rückgewinnung von Kies und Sand aus Frischbeton-Restmengen bekannt, das gekennzeichnet ist durch einen Einfülltrichter zur Aufnahme dieser Restmengen, einen sich daran anschließenden, schräg aufwärts gerichteten Waschtrog mit etwa halbkreisförmigem Querschnitt, eine in diesem Waschtrog sich drehende Förderschnecke, die die in dem Einfülltrichter enthaltene Restmenge zu einer an ihrem oberen Ende vorgesehenen Abwurföffnung des Waschtrog transportiert, unter welcher ein Separierungssieb zur Trennung der gröberen Anteile nach ihren verschiedenen Korngrößen vorgesehen ist, sowie auf der Oberseite des Waschtrogs angeordnete Sprührohre zum Einspritzen von Frischwasser, das die an dem hochtransportierten Kies und Grobsand noch anhaftenden Zement- und Feinstsandreste endgültig abwäscht und in den Einfülltrichter zurückspült. Diese dort sich ansammelnde Zement- und Feinstsandtrübe fließt von dort über ein Überlaufrohr in einen Absetzbehälter, auf dessen Boden sich die festen Bestandteile absetzen. Das darüber sich sammelnde Wasser wird dann abgepumpt und der Bodensatz wird mittels LKWs zu einer Sammelstelle abtransportiert. (DE-GM 75 25 970)

Dieses Gerät hat sich zwar bisher in der Praxis hervorragend bewährt. Zu bemängeln ist jedoch bei ihm, daß der staubförmige Zement und der Feinstsand sowie das Spülwasser als störende, unverwertbare Reste zurückblieben.

Der Erfindung liegt die Aufgabe zu Grunde, ein Verfahren und eine Vorrichtung zur Trennung und Wiederverwendung aller beim Rücktransport anfallenden Betonbestanteile, und des Spülwassers, das zur Trennung des Zements und der Feinstsandteile von dem Kies und dem gröberen Sand sowie zum Reinigen der Fahrzeugtrommel dient, zu entwickeln, wobei dieser Vorgang, möglichst automatisch gesteuert, so erfolgen soll, daß durch die Rückstände keinerlei Umweltverschmutzung entsteht, vielmehr die Rentabilität der Anlage angehoben wird.

Diese Aufgabe wurde gelöst durch das Verfahren und die Vorrichtung gemäß den Patentansprüchen 1 bzw. 2. Weitere vortelhafte Ausgestaltungen der erfindungsgemäßen Vorrichtung sind in den Patentansprüchen 3 bis 5 beschrieben.

Die durch die Erfindung erreichten Vorteile sind im wesentlichen darin zu sehen, daß sämtliche Bestandteile des unverbrauchten Frischbetons, nach einer vorhergehenden Trennung, sowie auch das zu dieser Trennung und zum Auswaschen der Fahrzeugtrommeln erforderliche Spülwasser einer vollständigen Wiederverwertung zugeführt werden. Auf diese Weise wird das vorher nicht zu vermeidende Erhärten der Rückstände und die dadurch verursachte Umweltverschmutzung vermieden. Zur Rentabilitätsanhebung der Anlage gehört auch die Tatsache, daß sie auf Winterbetrieb geschaltet, auch bei Frost weiterbetrieben werden kann, ohne daß dadurch irgendwelche Schäden entstehen.

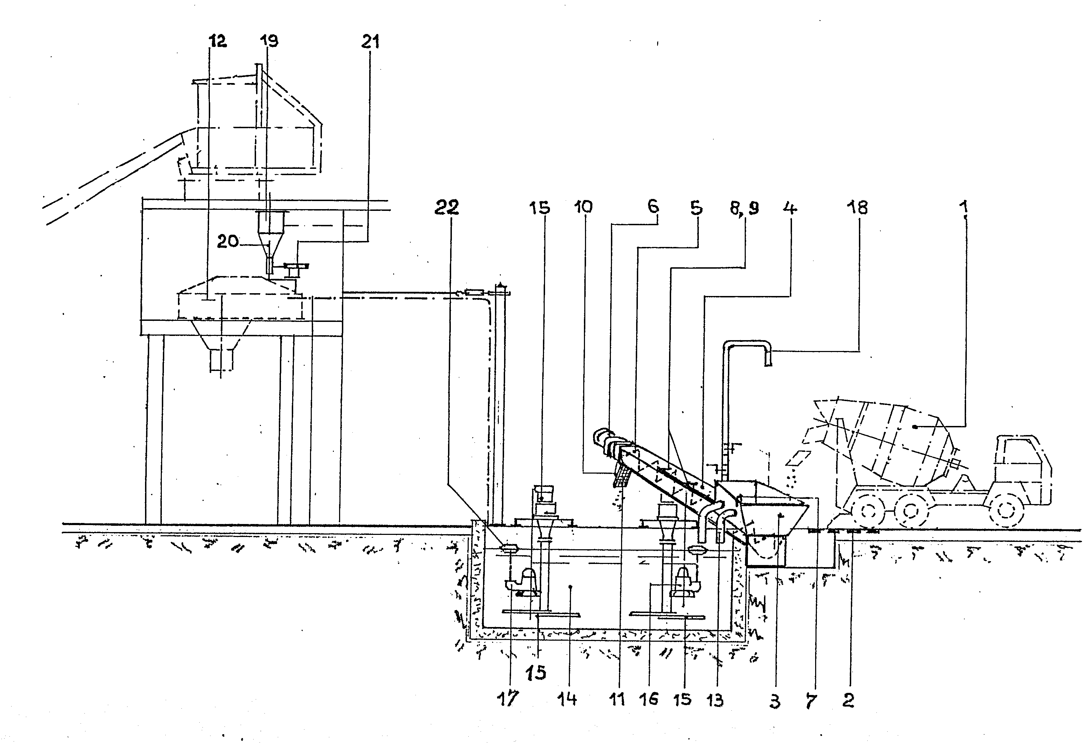

Die Zeichnung erläutert die erfindungsgemäße Vorrichtung an einem Ausführungsbeispiel.

-3-

0111014

Der an den Baustellen angefallene Restbeton wird von den
Fahrmischern 1 zur Restbetonaufbereitungsanlage zurückgebracht.
Sie fahren dabei zweckmäßigerweise rückwärts an die Restbetonaufbereitungsanlage heran und lösen dabei in der im Boden eingelassenen
Induktionsschleife 2 einen Steuerimpuls aus. Dadurch wird die
Funktion der Restbetonaufbereitungsanlage in Gang gesetzt.

In an sich bekannter Weise wird zuerst der zurückgebrachte
Restbeton aus der Mischtrommel des Fahrmischers in den am
unteren Ende des schräg aufwärts gerichteten Waschtrogs 4
angeordneten Einfülltrichter 3 entleert. In diesem Einfülltrichter befindet sich eine regulierbare Menge Wasser, das
hier zum Auswaschen des Restbetons dient. In dem Waschtrog 4
ist koaxial eine Förderschnecke 5 angeordnet, die mit ihrem
unteren Ende in den Einfülltrichter 3 hineinragt, und die
an ihrem oberen Ende durch den E-Motor 6 angetrieben wird.
Beim Einschalten der Restbetonaufbereitungsanlage beginnt sich die
Förderschnecke 5 zu drehen.Sie wirbelt dabei den in den Einfülltrichter 3 eingefüllten und jetzt mit Wasser verdünnten
Restbeton durcheinander. Gleichzeitig nimmt sie den Kies
und den gröberen Sand in dem Waschtrog 4 mit nach oben,
während der Feinstsand und er staubfeine Zement zum größten
Teil in dem Einfülltrichter 3 zurückbleiben. Da die Trennung
dieser Bestandteile in dem Einfülltrichter 3 aber noch
ungenügend ist, und dem Kies und dem gröberen Sand noch
eine Menge Feinstsand und Zement anhaftet, wird dieses
Material auf seinem Weg in dem Waschtrog 4 über eine
Düse 7 u./o. die Sprührohre 8,9 von der Oberseite des
Waschtroges her mit Wasser besprüht und so "gewaschen".
Das Sprühwasser, der Feinstsand und der Zement fließen
in den Einfülltrichter 3 zurück. Der gröbere Rest wird
von der Förderschnecke 5 in dem Waschtrog 4 aufwärts transportiert bis er durch eine an seinem oberen Ende vorgesehene Abwurföffnung lo, in erdfeuchtem Zustand, über ein
dort angebrachtes Separierungssieb 11 nach unten herausfällt. Anschließend wird er wieder einem Betonmischer 12
zugeführt und einer neuen Betoncharge beigemischt.

-4-

Die in dem Einfülltrichter 3 gesammelte Trübe, die aus
dem Waschwasser, dem Zement und dem Feinstsand besteht,
fließt, nachdem sie dort ein bestimmtes Niveau erreicht
hat, über die Überlaufrohre 13 in das Becken 14. Die in
diesem Becken 14 vorgesehenen Rührwerke 15, die höheneinstellbar sind, sollen verhüten, daß sich die Trübe
in dem Becken absetzt und erhärtet. Diese Rührwerke 15
werden über Zeitrelais gesteuert und in vorprogrammierten
Abständen ein- und ausgeschaltet.

Weiterhin sind in dem Becken 14 zwei ebenfalls automatisch
gesteuerte Pumpen 16,17 angeordnet. Die erste dieser Pumpen 16
hat eine vielfache Funktion. Sie pritzt einmal über die
auf der Oberseite des Waschtrogs 4 angeordnete Düse 7,
unter der ein hier nicht dargestelltes kegeliges Prallblech vorgesehen ist, die wässerige Trübe auf den dort
befindlichen Kies und den Grobsand und unterstützt so
den Waschvorgang. Gleichzeitig wird dabei der Flüssigkeitsstand in dem Einfülltrichter 3 ergänzt. Über eine abgezweigte Leitung wird außerdem dem Galgen 18, der zum Ausspülen der entleerten Trommel des jeweilig angefahrenen
Fahrmischers 1 dient, die notwendige Flüssigkeit gesteuert
zugeführt.

Die zweite Pumpe 17 dosiert, ebenfalls automatisch gesteuert,
die im Becken 14 angesammelte Trübe einer erneuten Verwendung in dem Mischer 12 zu. Zwischen die Pumpe 17 und
dem Mischer 12 ist ein Vorratsbehälter 19 geschaltet, der
etwa oberhalb des Mischers angeordnet ist und der mit
einem konischen Auslauf 2o ausgestattet ist. Diese Form des
Auslaufs soll ebenfalls ein Absetzen der Trübe verhindern. Die Entleerung des Vorratsbehälters 19 wird elektrisch
pneumatisch gesteuert. Die Konsistenz der Trübe, d.h. ihr Gehalt
an Zement und Feinstsand kann über ein Meßgerät 21 bestimmt
werden. Ist der Anteil an Feststoffen zu hoch, so wird
der Trübe Frischwasser zugemischt.
Frischwasser wird auch dem Becken 14, über eine dort angeordnete Schwimmersteuerung 22 dosiert, zugeführt,

**0111014**

sobald das Niveau der Trübe dort entsprechend abgesunken
ist. Ebenso dient Frischwasser zur endgültigen Befreiung
des Kieses und des Grobsandes vom Zement und vom Feinstsand. Dazu sind über dem Waschtrog 4 Sprührohre 8,9 vorgesehen aus denen das Frischwasser gesteuert herausspritzt.
Es fließt ebenfalls in den Einfülltrichter 3 zurück.

All diese oben geschilderten Vorgänge können automatisch
und/oder manuell gesteuert werden.

Um ein Einfrieren der Restbetonaufbereitungsanlage zu verhindern,
wird sie bei strengem Frost in programmierten Abständen kurzzeitig in Gang gesetzt.

Patentansprüche:

1. Verfahren zur Trennung und Wiederverwertung aller Restbeton-Bestandteile, bei welchem der von den Baustellen zurückkommende Restbeton in den Einfülltrichter (3) der Vorrichtung eingefüllt, dort mit Wasser vermengt durch die koaxial in dem schrägaufwärts gerichteten Waschtrog (4) angeordnete Förderschnecke (5) durchwirbelt und die gröberen Bestandteile, Kies und Grobsand, in dem Waschtrog (4) bis zur Abwurföffnung (1o) aufwärts transportiert werden, wobei auf diesem Weg die groben Bestandteile durch über die auf dem Waschtrog (4) angeordneten Sprührohre eingespritztes Wasser gewaschen, die Feinstsandteile in den Einfülltrichter zurückfließen und die Grobanteile durch ein unter der Abwurföffnung (1o) angebrachtes Separierungssieb (11) mit unterschiedlicher Maschenweite nach den verschiedenen Korngrößen aufgeteilt werden.
dadurch gekennzeichnet, daß
die mit Wasser vermengten Feinst anteile, d.h. die Trübe in ein Becken (14) überfließt, dort in periodischen Abständen umgerührt wird, ein Teil dieser Trübe zur Verdünnung des Restbetons wieder in den Einfülltrichter (3) zurückgepumpt und ein weiterer Teil zum Ausspülen der Fahrmischer-Trommeln verwendet wird, während der durch Frischwasserzufuhr sich immer wieder ergänzende Rest der Trübe dem Betonmischer (12) direkt oder über einen Vorratsbehälter (19) zur Beimischung zu einer neuen Charge zugeführt wird, wobei gegebenfalls die Konsistenz der Trübe gemessen und, falls notwendig, durch Zufuhr von Frischwasser verdünnt wird, und daß die Vorrichtung bei Frost, automatisch gesteuert, in Abständen kurzzeitig in Funktion gesetzt wird.

2. Vorrichtung zum Durchführen des Verfahrens nach Anspruch 1, mit einem Einfülltrichter (2), einem sich daran anschließenden, schräg-aufwärts verlaufenden Waschtrog(4) mit einer Abwurföffnung (1o) am oberen Ende und einer koaxial in ihm angeordneten Förderschnecke (5) und auf seiner Oberseite vorgesehene Sprührohre (8,9)

gekennzeichnet durch

ein durch Überlaufrohre (13) mit dem Einfülltrichter (3)
in Verbindung stehendes Becken (14), in diesem angeordnete
Rührwerke (15) sowie Pumpen (16,17) zum Rücktransport
eines Teils der Trübe aus dem Becken (14) in den Einfülltrichter (2) und in den Galgen (18) zum Ausspülen der
Fahrmischer-Trommel (1) sowie zum Transport der Trübe
in den Betonmischer (12) sowie durch Steuer- und Regelorgane
für die vorgenannten Einrichtungen.

3. Vorrichtung nach Anspruch 2, dadurch gekennzeichnet,
daß das Einleiten der mechanischen Steuerung durch eine
von dem Fahrmischer (1) erregte Induktionsschleife (2)
erfolgt.

4. Vorrichtung nach Anspruch 2 oder 3, dadurch gekennzeichnet,
daß dem Betonmischer (12) ein Vorratsbehälter (19) mit
konischem Auslauf (2o) vorgeschaltet ist.

5. Vorrichtung nach einem der Ansprüche 2 bis 4, dadurch
gekennzeichnet, daß zwischen dem Becken (14) und dem Betonmischer (12) ein Meßgerät zur Bestimmung der Konsistenz
der Trübe vorgesehen ist.

1/1

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | EP-A-0 017 504 (WEIGH-TECH, INC.) <br> * Seite 14, Zeile 1 - Seite 26, Zeile 9; Seite 28, Zeile 12 - Seite 29, Zeile 18; Seite 46, Zeilen 4-13; Figuren 1-5 * | 1,2,5 | B 28 C 9/00 <br> B 03 B 9/06 <br> B 28 C 5/46 |
| | --- | | |
| A | US-A-3 997 434 (P. MACAULEY) <br> * Spalte 2, Zeile 30 - Spalte 4, Zeile 17; Figuren 1,2 * | 1,2 | |
| | --- | | |
| A,D | DE-U-7 525 970 (WEISKIRCHER) <br> * Seite 6, Zeile 21 - Seite 7, letzte Zeile; Figur * | 1,2 | |
| | --- | | |
| A | DE-C-2 614 588 (KLÄRFIX et al.) <br> * Spalte 6, Zeile 25 - Spalte 8, Zeile 51; Figur 9 * | 1-3 | RECHERCHIERTE SACHGEBIETE (Int. Cl. 3) |
| | --- | | |
| A | DE-A-2 234 268 (A. RENZ) <br> * Seite 1, Zeilen 1-12; Seite 3, Zeile 4 - Seite 4, Zeile 8; Figur * | 1 | B 28 C <br> B 03 B <br> E 03 B |
| | --- | | |
| A | US-A-3 278 022 (A. MOESCHLER) <br> * Spalte 4, Zeile 62 - Spalte 5, Zeile 3; Figuren 1,2 * | 3 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 12-08-1983 | LAVAL J.C.A |

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-3 008 721 (BOTTROPER-STAHLBAU FISCHEDICK) * Seite 3, Zeile 9 - Seite 4, Zeile 5; Figur * ----- | 4 | |
| | | | RECHERCHIERTE SACHGEBIETE (Int. Cl. ³) |

Der vorliegende Recherchenbericht wurde für alle Patentansprüche erstellt.

| Recherchenort DEN HAAG | Abschlußdatum der Recherche 12-08-1983 | Prüfer LAVAL J.C.A |
|---|---|---|